Europäisches Patentamt

European Patent Office

Office européen des brevets

(19)

(11) Veröffentlichungsnummer: **0 267 429 B1**

# EUROPÄISCHE PATENTSCHRIFT

(12)

(45) Veröffentlichungstag der Patentschrift: 08.05.91

(51) Int. Cl.5: **E05B 49/00, A45C 11/32**

(21) Anmeldenummer: **87114665.0**

(22) Anmeldetag: **07.10.87**

(54) **Gerät zum Fernsteuern einer mit einem Empfänger ausgerüsteten Schliessanlage, insbesondere für Kraftfahrzeuge.**

(30) Priorität: **20.10.86 DE 3635609**

(43) Veröffentlichungstag der Anmeldung:
**18.05.88 Patentblatt 88/20**

(45) Bekanntmachung des Hinweises auf die
Patenterteilung:
**08.05.91 Patentblatt 91/19**

(84) Benannte Vertragsstaaten:
**DE ES FR GB IT SE**

(56) Entgegenhaltungen:
**EP-A- 0 088 699**    **EP-A- 0 117 204**
**FR-A- 2 558 696**    **US-A- 2 558 265**
**US-A- 2 822 684**    **US-A- 3 863 062**

(73) Patentinhaber: **Siemens Aktiengesellschaft
Wittelsbacherplatz 2
W-8000 München 2(DE)**

(72) Erfinder: **Kinzler, Hans, Dipl.-Ing. FH
Roter Brachweg 69
W-8400 Regensburg(DE)**
Erfinder: **Kotowicz, Aleksaner, Dipl.-Ing.
Annahofstrasse 7
W-8400 Regensburg(DE)**

## Beschreibung

Die Erfindung betrifft eine Schließeinheit gemäß Oberbegriff von Anspruch 1.

Eine solche Schließeinheit ist aus der FR-PS 25 58 696 grundsätzlich bekannt; über die Unterbringung von auswechselbarer Batterien für den Sender, ist nichts gesagt.

Andererseits ist aus der europäischen Patentanmeldung 0 088 699 ein Gehäuse mit einem mechanischen Schlüssel, einem Sender und mit Batterien bekannt, bei dem jedoch der Schlüssel als zylindrischer Bolzen ausgeführt und um seine Längsachse drehbar im Gehäuse angeordnet ist.

Der Erfindung liegt die Aufgabe zugrunde, bei einer Schließeinheit gemäß Oberbegriff von Anspruch 1 mit einem Schlüssel mit kreisförmigem Lagerteil und exzentrischer Klinge sich möglichst kleine Abmessungen des Gehäuses und einfachen Zugang zu einem Batteriefach zu erreichen.

Die erfindungsgemäße Lösung ist in Anspruch 1 gekennzeichnet. Die Erfindung ermöglicht es, Schlüssel, Sender und Batterien in einem Gehäuse unterzubringen, dessen Länge und Breite im wesentlichen durch die Abmessungen des Schlüssels und dessen Höhe durch die Bauhöhe der Batterie bestimmt ist.

Eine vorteilhafte Ausgestaltung besteht darin, daß Lagerstück des Schlüssels als Kreisring auszubilden und die Arretiermittel sowie Antrieb innerhalb dieses Kreisringes unterzubringen.

Gemäß einer besonders vorteilhaften Ausgestaltung der Erfindung ist die Klinge des Schlüssels mit dem Lagerteil lösbar verbunden: Auf diese Weise ist es einfach möglich, die vorgefertigten Geräte nachträglich zu codieren und mit einem dazugehörigen Schlüssel zu versehen.

Weitere vorteilhafte Ausgestaltungen der Erfindung sind in den Unteransprüchen gekennzeichnet.

Die Erfindung wird anhand des in den Figuren dargestellten Ausführungsbeispieles näher erläutert; es zeigen:

FIG 1    eine Explosionszeichnung des Gerätes etwa im Maßstab 1:1,

FIG 2    eine Draufsicht auf das Unterteil des Gehäuses in Richtung des Pfeiles II in FIG 1,

FIG 3    einen Querschnitt durch das Gehäuse nach FIG 2 entlang Linie III,

FIG 4    eine Seitenansicht des Kupplungszapfens,

FIG 5    eine Draufsicht auf den Kupplungszapfen in Richtung des Pfeiles V in FIG 4,

FIG 6    eine Draufsicht auf das Trennteil in Richtung des Pfeiles VI in FIG 1,

FIG 7    einen Schnitt durch das Trennteil entlang Linie VII in FIG 6,

FIG 8    einen Teilschnitt durch das Trennteil entlang Linie VIII in FIG 6,

FIG 9    einen Längsschnitt durch den Deckel entlang Schnittlinie IX in FIG 1, wobei jedoch zusätzlich der Schlüssel mit seiner Halterung sowie der Auslöser dargestellt sind,

FIG 10    eine Ansicht der FIG 9 in Richtung des Pfeiles X,

FIG 11    eine Draufsicht auf den Lagerring des Schlüssels in vergrößerter Darstellung,

FIG 12    eine Draufsicht auf die Lagerscheibe in Richtung des Pfeiles XII in FIG 1,

FIG 13    die Teile der Drehsperre in Sperrposition, nämlich den Sperranschlag - Schnittlinie XIII in FIG 10 - und Sperrfeder - Schnittlinie VIII in FIG 6,

FIG 14    einen Querschnitt durch das zusammengebaute Gehäuse geführt durch die Zentralachse Z, und zwar entsprechend Schnittlinie XIV in FIG 9 und 10, und

FIG 15    einen Querschnitt durch das zusammengebaute Gehäuse entsprechend Schnittlinie XV in FIG 9 und 10.

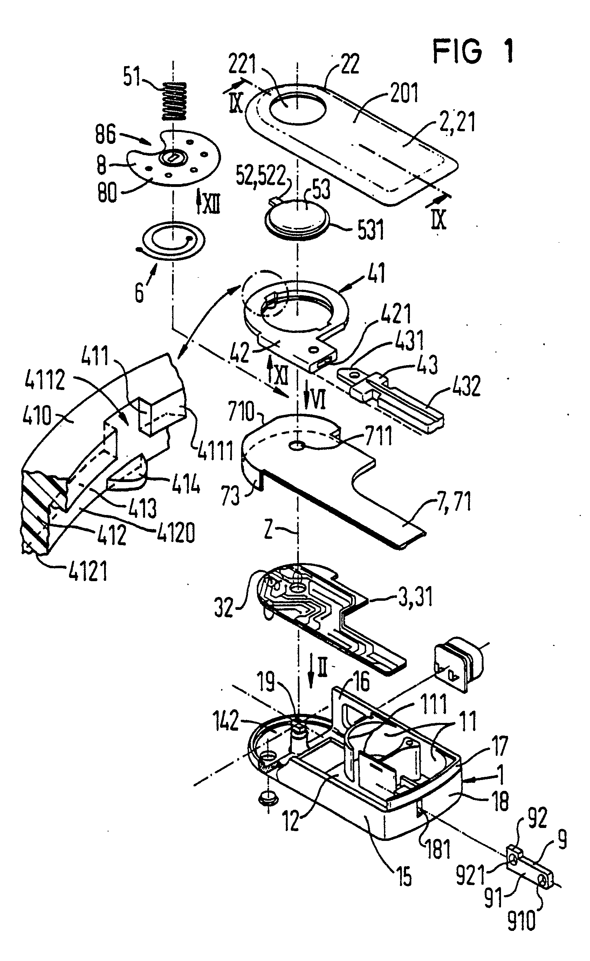

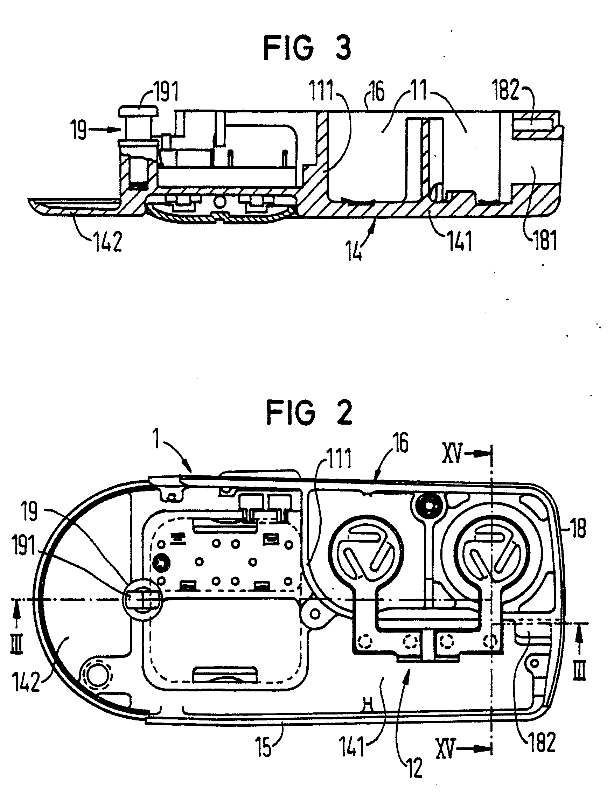

Das Gehäuse besteht aus einem Unterteil 1 und einem Deckel 2; beide Teile haben jeweils ein etwa rechteckiges Hauptstück 141 bzw. 21 und ein daran anschließendes, halbkreisförmiges Endstück 142 bzw. 22 (FIG 1, 2).

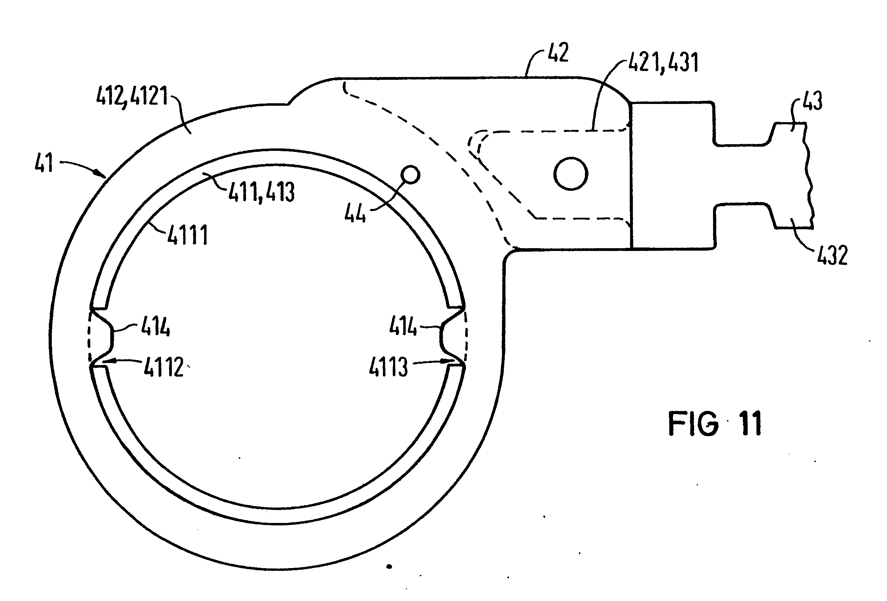

An der Innenseite des Deckels 2 ist der Schlüssel 4 gehaltert. Er besteht aus einem Lagerring 41 mit einem Ansatz 42, der exzentrisch zur Zentralachse Z und etwa tangential zu dem Lagerring angeordnet ist und der einen Aufnahmeschlitz 421 aufweist (FIG 1, 11). An dem Lagerring 41 ist eine Klinge 432 des Schlüssels 4 mit Bart 432 und Kupplungsstück 431 lösbar befestigt: Zu diesem Zweck steckt die Klinge mit dem Kupplungsstück 431 in dem Aufnahmeschlitz 421 und ist darin durch eine Schraube oder einen Niet gesichert.

Der Lagerring 41 des Schlüssels 4 hat im wesentlichen L-förmigen Querschnitt (vgl. vergrößertes Detail in FIG 1) mit einem Führungsschenkel 411 und einem dazu etwa rechtwinkligem Querschenkel 412. Der Führungsschenkel 411 hat an zwei einander diametral gegenüberliegenden Stellen eine Arretierkerbe 4112 und eine Positionskerbe 4113 (FIG 11). Im Bereich dieser Kerben und im Abstand von dem Führungsschenkel 411 ist an der Innenseite 4120 des Querschenkels 412 je ein Rastanschlag 414 angebracht: Dieser begrenzt den axialen Bewegungsraum einer Rastvorrichtung, die jeweils in eine der Kerben 4112, 4113 eingreift und die zum Lösen des Schlüssels 4 aus der Kerbe gegen den Rastanschlag 411 gedrückt wird.

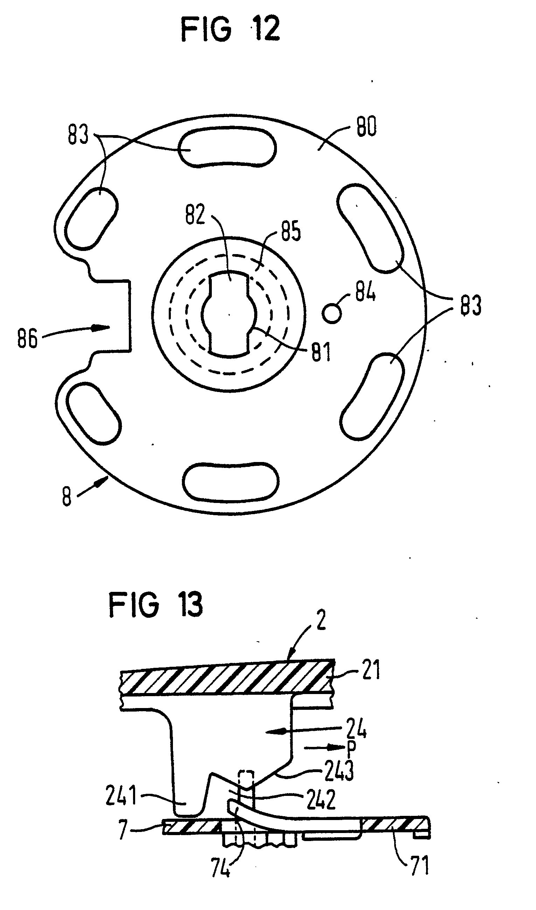

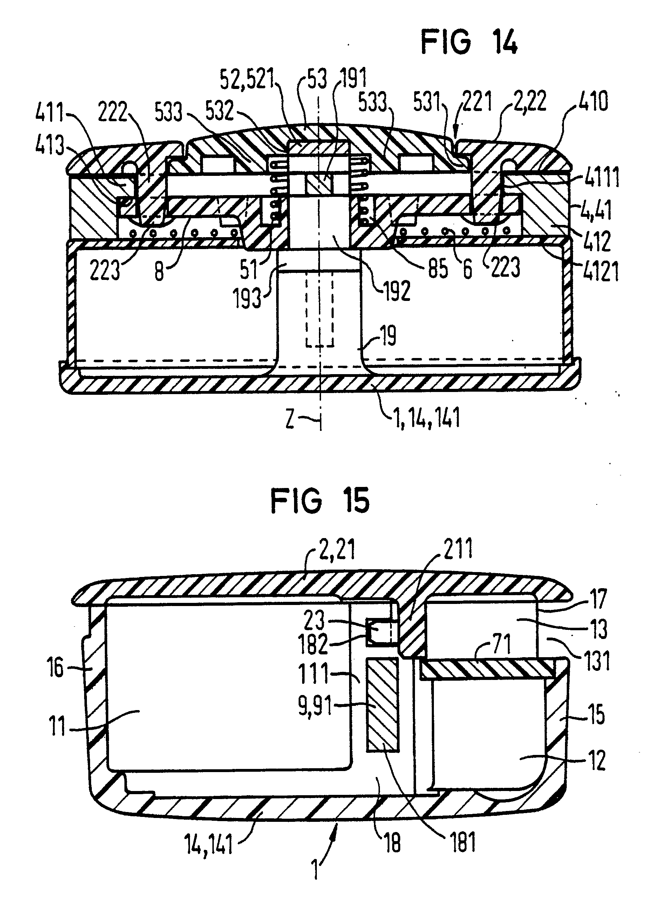

Der Deckel 2 hat eine kreisförmige Deckelöffnung 221, die zur Hälfte in dem halbkreisförmigen Endstück 22 und zur Hälfte in dem Hauptstück 21 liegt und die koaxial zur Zentralachse Z liegt. An der Innenseite hat der Deckel 2 koaxial zu der Zentralachse Z ein kreisringförmiges Lagerstück 222 (FIG 14). Auf diesem ist der Lagerrung 41 des Schlüssels 4 geführt, wobei ein Innenrand 4111 des Führungsschenkels 411 außen an dem Lagerstück 222 anliegt. Zudem liegt der Lagerring 41 mit einer Außenseite 410 am Deckel 2 an. Der Schlüssel 4 ist in dieser Position gesichert durch eine kreisförmige Lagerscheibe 8 (FIG 12), die ebenfalls koaxial zur Zentralachse Z angeordnet und von dem Querschenkel 412 des Lagerrings 41 umschlossen ist (FIG 14). Ein außenliegender Randbereich der Lagerscheibe 8 liegt dabei auf der Lagerfläche 413 des Führungsschenkels 411 auf. Verbunden ist die Lagerscheibe 8 mit dem Deckel 2 mit Hilfe von Zapfen 223, die sich ausgehend vom Lagerstück 222 durch zugeordnete Zapfenlöcher 83 in der Lagerscheibe 8 hindurch erstrecken und deren Enden "vernietet" sind. Auf diese Weise ist der Lagerring 41 des Schlüssels 4 zwischen der Innenseite des Deckels 2 und der Lagerscheibe 8 drehbar geführt (FIG 14).

In der Deckelöffnung 221 ist ein kreisförmiger Auslöser 53 angeordnet, der mit einem Anschlagrand 531 an der Innenseite des Deckels 2 anliegt. Er wird in dieser in FIG 14 dargestellten Position durch eine Druckfeder 51 gehalten, die sich einerseites in einer Ringnut 85 der Lagerscheibe 8 und andererseits an der Innenseite des Auslösers 53 abstützt und die dort durch halbkreisförmige Führungsrippen 533 geführt ist.

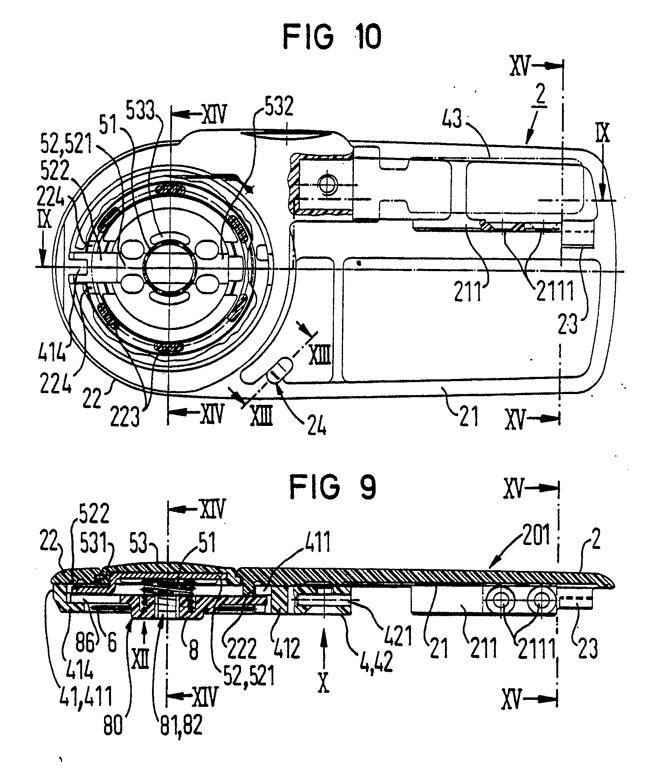

Auf der Innenseite des Auslösers 53 ist in einer Nut 532 eine Rastvorrichtung 52 mit einem Rastschenkel 521 angeordnet, der diametral durch die Zentralachse Z verläuft (FIG 9, 10). Eine Verlängerung des Rastschenkels 521 bildet eine Rastnase 522, die sich über den Rand des Auslösers 53 hinaus erstreckt (vgl. auch FIG 1) und die in der in den Figuren dargestellten Lage des Auslösers 53 in die Arretierkerbe 4112 des Lagerringes 41 des Schlüssels 4 eingreift. Der Schlüssel ist dann in der in FIG 10 strichpunktiert dargestellten Arretierposition festgehalten, wobei der durch eine Spiralfeder 6 (FIG 9, 14) vorgespannt ist, die mit einem Ende an einem Haltezapfen 84 an einer Oberseite 80 der Lagerscheibe 8 und mit dem anderen Ende an einem Befestigungszapfen 44 des Lagerrings 41 befestigt ist.

Wird der Auslöser 53 gegen die Kraft der Druckfeder 51 in das Gehäuse hineingedrückt, dann wandert die Rastnase 522 der Rastvorrichtung 52 geführt durch zwei Führungspfosten 224 am Lagerstück 222 in eine Aussparung 86 (FIG 9, 12) der Lagerscheibe 8 bis sie an den Rastanschlag 414 des Lagerrings 41 stößt (FIG 9). Der Schlüssel 4 wird dann durch die Spiralfeder 6 aus der dargestellten Arretierposition um 180° aus dem Gehäuse in eine Arbeitsposition herausgedreht, in der der Rastschenkel 421 in die Positionskerbe 4113 (FIG 11) des Lagerrings 41 einschnappt: Auf diese Weise ist die Relativlage des Schlüssels 4 auch in der Arbeitsposition gegenüber dem Gehäuse fixiert. Der Schlüssel 4 wird manuell gegen die Kraft der Spiralfeder 6 in das Gehäuse zurückgedrückt, wozu zunächst der Auslöser zu drücken ist, damit die Rastnase 522 aus der Positionskerbe 4113 herauskommt. In der Arretierposition im Gehäuse schnappt dann die Rastnase 522 wieder in die Arretierkerbe 4112 im Lagerring 41 und hält den Schlüssel 4 in der in den Figuren dargestellten Arretierposition fest.

Wie insbesondere aus FIG 10 ersichtlich, ist die Breite des Gehäuses im wesentlichen nur durch den Lagerring 41 und die Länge des Gehäuses durch die Klinge 43 des Schlüssels 4 bestimmt. Aufgrund der exzentrischen Anordnung der Klinge 43 relativ zum Lagerring 41 entsteht neben der Klinge 43 ein Freiraum, der gegen die Klinge 43 (in FIG 10 strichpunktiert) durch eine Zwischenwand 211 an der Innenseite des Deckels 2 (FIG 15) begrenzt ist.

Das Hauptstück 141 des Unterteiles 1 (FIG 1, 2, 3, 15) ist durch eine Seitenwand 15, eine Rückwand 18 und eine Längswand 16 begrenzt, die senkrecht auf dem Boden 14 stehen; Rückwand 18 und Längswand 16 sind um einen Randstreifen 17 höher als die Seitenwand 15: Dadurch entsteht im Bereich der Seitenwand 15 zwischen Deckel 2 und Unterteil 1 ein Fachschlitz 131 (FIG 15) als Zugang für das Schlüsselfach 13. Dieses ist innen durch die Zwischenwand 211 des Deckels 2 begrenzt. Auf der anderen Seite dieser Zwischenwand 211 erstreckt sich das Batteriefach 11, das durch Fachwandungen 111 begrenzt ist, und das vom Boden 14 des Unterteils 1 bis zum Deckel 2 reicht (FIG 15).

Der Sender 3 ist auf einer beidseitig bestückten Leiterplatte 31 und diese im Elektronikfach 12 unter dem Schlüsselfach 13 (FIG 15) untergebracht. Er ist durch ein Trennteil 7 (FIG 1, 6, 7) abgedeckt. Letzteres hat eine Zwischenplatte 71, die sich parallel zum Boden 14 erstreckt (FIG 14, 15). Im Bereich des halbkreisförmigen Endstückes 142 steht von der Zwischenplatte 71 eine etwa halbkreisförmige Bogenwand 73 ab, die das Gehäuse in diesem Bereich nach außen abschließt. Diese Bogenwand 73 besteht aus einem für Infrarotstrahlung durchlässigen Kunststoff und hat etwa in der Mitte eine Zielmarke 710 in Form einer Abweichung von der Kreisform. Hinter dieser Zeilmarke ist die Sendediode 32 des Senders 3 untergebracht. Die Form der Zielmarke ist auch im Dunkeln abtastbar und ermöglicht so eine Ausrichtung des Senders auf den Empfänger.

Der Deckel 2 mit daran befestigtem Schlüssel 4 (FIG 9 und 10) und der Unterteil 1 mit Sender 3 und Trennteil 7 sind durch eine Einrenkverbindung und eine im Abstand davon angeordnete Riegelverbindung miteinander gekuppelt:

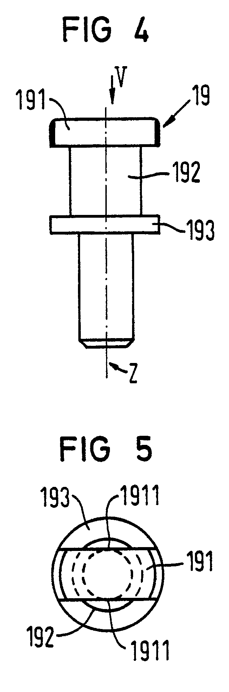

Die Einrenkverbindung besteht aus einem Kupplungszapfen 19 mit einer Achse 192 zwischen einem Lagerrand 193 und einem Hammerkopf 191 mit Längsseiten 1911 (FIG 4, 5). Dieser Kupplungszapfen 19 steht koaxial zur Zentralachse Z rechtwinklig von dem Boden 14 des Unterteils 1 ab (FIG 1, 3, 14) und ragt durch eine Plattenbohrung 711 im Trennteil 7; die Längsseiten 1911 verlaufen dabei parallel zu der Seitenwand 15. Dem Kupplungszapfen 19 ist ein Lagerloch 81 mit Einrenkschlitz 82 in der Lagerscheibe 8 an dem Deckel 2 zugeordnet; der Einrenkschlitz 82, durch den der Hammerkopf 191 paßt, verläuft dabei quer zu den Längsseiten 1911 des Hammerkopfes 191. Das Lagerloch 81 hat einen Durchmesser, der zu dem Durchmesser der Achse 192 des Kupplungszapfens 19 paßt.

Die Riegelverbindung besteht aus einer Riegeltasche 182 an der Innenseite der Rückwand 18 des Unterteils 1 (FIG 15) und einem dazu passenden Riegel 23 an der Zwischenwand 211 des Deckels 2, der parallel zu dem Deckel 2 verläuft.

Zum Zusammenbau wird der Deckel 2 mit Schlüssel 4 gemäß FIG 9 um 90° gegenüber dem Unterteil 1 verdreht. In dieser Lage wird der Hammerkopf 191 des Kupplungszapfens 19 durch den Einrenksch litz 82 der Lagerscheibe 8 an der Deckel 2 gesteckt und dann der Deckel 2 um 90° gegen das Unterteil 1 gedreht bis die beiden Teile die in FIG 15 gezeigte Endposition einnehmen. In dieser steht der Hammerkopf 191 quer zu dem Einrenkschlitz 82 in der Lagerscheibe 8 und der Riegel 23 greift in die Riegeltasche 182 ein: Die beiden Teile des Gehäuses sind somit an zwei voneinander entfernten Stellen miteinander gekuppelt. Diese Lage ist gesichert durch eine nicht dargestellte Sicherungsschraube, die durch das Schlüsselfach 13 von außen zugänglich ist und die sich durch die Zwischenwand 211 des Deckels 2 hindurch in eine Gewindebohrung 921 in einem Bohrungsschenkel 92 eines Ösenwinkels 9 (FIG 1) erstreckt. Der Ösenwinkel 9 ist in der Fachwandung 111 und einem Rückwandschlitz 181 geführt und gehalten. Er hat einen Ösenschenkel 91 mit einer Öse 910 an einem Ende. Der Ösenwinkel 9 kann in zwei Positionen festgeschraubt sein: Hierzu hat die Zwischenwand 211 des Deckels 2 im Abstand nebeneinander zwei Befestigungsbohrungen 2111 (FIG 9, 10): Ist die Sicherungsschraube durch die linke Befestigungsbohrung geführt, dann ist der Ösenwinkel 9 vollständig im Gehäuse versenkt. Im anderen Falle schaut die Öse 910 aus dem Gehäuse heraus.

Zum Wechseln der Batterien muß das Batteriefach 11 zugänglich sein: Hierzu können die beiden Gehäuseteile nach Lösen der Sicherungsschraube bis in eine Sperrposition gegeneinander verdreht werden. Eine Drehsperre sorgt dabei dafür, daß die beiden Teile nicht soweit gegeneinander verdreht werden können, daß die Einrenkverbindung die beiden Teile freigibt. Hierzu steht von der Innenseite des Deckels 2 ein Sperranschlag 24 etwa senkrecht ab. Seine Position ist in FIG 10 angedeutet und seine Seitenansicht aus FIG 13 ersichtlich. Der Sperranschlag 24 hat im wesentlichen einen Anschlagzapfen 241, eine schräge Rampe 243 und dazwischen eine Vertiefung 242.

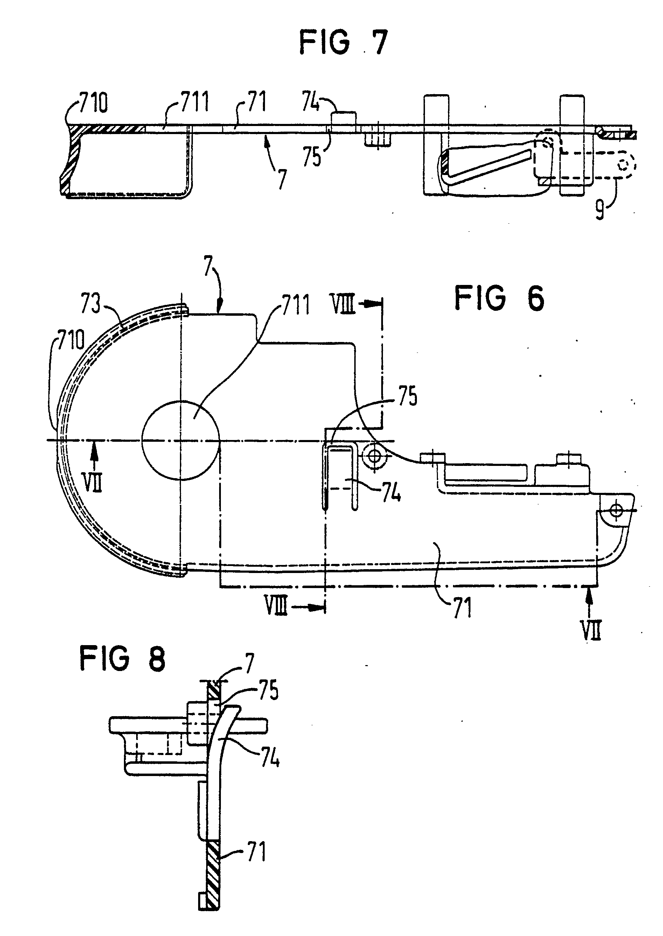

Diesem Sperranschlag 24 ist an der Zwischenplatte 71 eine Sperrfeder 74 zugeordnet (FIG 6 bis 8), die in FIG 13 ebenfalls gezeigt ist. Beim Öffnen wird der Deckel 2 in Richtung des Pfeiles P gegenüber dem Unterteil 1 mit dem Trennteil 7 bewegt, bis die Sperrfeder 74 gegen den Anschlagzapfen 241 stößt. In dieser Sperrposition ist die Einrenkverbindung noch voll wirksam, das Batteriefach andererseits zugänglich. Zur vollständigen Demontage der beiden Teile muß man die Sperrfeder 74 z.B. mit einem Schraubenzieher in die zugehörige Plattenaussparung 75 in der Zwischenpaltte 71 hineindrücken. Um diese zu erleichtern dient die Rampe 243 als Einführhilfe und die Begrenzung der Vertiefung 242 als Widerlager.

## Ansprüche

1. Schließeinheit
   - mit einem mechanischen Schlüssel (4) mit kreisförmigem Lagerteil und davon exzentrisch abstehender Klinge (43),
   - mit einem Sender (3) zum Erzeugen eines modulierten Sendesignals zum Fernsteuern einer mit einem Empfänger ausgerüsteten Schließanlage, insbesondere eines Kraftfahrzeugs,
   - mit einem gemeinsamen Gehäuse (1, 2) für Sender (3) und Schlüssel (4),
   - mit einem kreisförmigen Lagerstück (222, FIG 14) in dem Gehäuse (1, 2), in dem der Schlüssel (4) mit seinem Lagerteil um eine Zentralachse (Z) drehbar so gelagert ist, daß seine Klinge (43) zwischen einer Arbeitsposition außerhalb des Gehäuses und einer Arretierposition in einem Schlüsselfach (13) des Gehäuses schwenkbar ist,
   **dadurch gekennzeichnet,**
   - daß das Gehäuse aus einem Unterteil (1) und einem flachen Deckel (2) besteht,

- daß der Schlüssel drehbar an dem Deckel (2) gelagert ist,
- daß ein Batteriefach (11; Fig 15) in dem Unterteil (1) vorgesehen ist, das neben und parallel zu dem Schlüsselfach (13) angeordnet ist, und
- daß der Deckel (2) und das Unterteil (1) gegeneinander schwenkbar sind und in einer Stellung das Batteriefach (11) freigeben.

2. Schließeinheit nach Anspruch 1,
**dadurch gekennzeichnet,**
daß die Breite des Gehäuses (1, 2) im wesentlichen gleich dem Durchmesser des kreisförmigen Lagerteiles des Schlüssels (4), die Länge des Gehäuses (1, 2) im wesentlichen gleich der Länge des Schlüssels (4) und die Höhe des Gehäuses (1, 2) im wesentlichen gleich der Höhe des Batteriefachs (11) ist.

3. Schließeinheit nach Anspruch 1,
**dadurch gekennzeichnet,**
daß der Schlüssel (4) als Lagerteil einen Lagerring (41; Fig 1,11) hat, und daß die Klinge (43) etwa tangential zu dem Lagerring (41) angeordnet und über ein Kupplungsstück (431) mit dem Lagerring (41) lösbar verbunden ist.

4. Schließeinheit nach Anspruch 1,
**dadurch gekennzeichnet,**
daß Unterteil (1) und Deckel (2) des Gehäuses durch eine Einrenkverbindung und eine im Abstand davon angeordnete Riegelverbindung miteinander gekuppelt sind, wobei
- die Einrenkverbindung koaxial zur Zentralachse (Z) liegt und aus einem Kupplungszapfen (19) mit Hammerkopf (191; Fig 4,5) einerseits und einem dazu passenden Lagerloch (81; Fig 12) mit Einrenkschlitz (82; Fig 12) andererseits und
- die Riegelverbindung (FIG 15) aus einer Riegeltasche (182; Fig 3) einerseits und einem Riegel (23; Fig 9) andererseits besteht.

5. Schließeinheit nach Anspruch 4,
**dadurch gekennzeichnet,**
daß zwischen Unterteil (1) und Deckel (2) des Gehäuses eine Drehsperre (24, 74; FIG 6; FIG 10; FIG 13) angeordnet ist, die ein Verdrehen der beiden Gehäuseteile gegeneinander um die Zentralachse (Z) so begrenzt, daß sich die Einrenkverbindung nicht lösen kann, daß aber das Batteriefach (11) zugänglich ist.

6. Schließeinheit nach Anspruch 4,
**dadurch gekennzeichnet,**

daß das Lagerstück (222; Fig 14) für den Schlüssel (4) ein Kreisring an der Innenseite des Deckels (2) ist, und daß der Auslöser (53) in Form eines federnden Druckknopfes innerhalb des Kreisrings angeordnet und durch eine Deckelöffnung (221) zugänglich ist.

7. Schließeinheit nach Anspruch 6,
**dadurch gekennzeichnet,**
daß der Lagerring (41) des Schlüssels (4) zwischen der Unterseite des Deckels (2) und einer Lagerscheibe (8) geführt ist (FIG 14),
daß die Lagerscheibe (8)
- über Zapfen (223) des Deckels (2) mit diesem verbunden ist,
- mittig das Lagerloch (81) und den Einrenkschlitz (82) der Einrenkverbindung aufweist, und
- auf der dem Deckel (2) zugewandten Seite eine zum Lagerloch (81) koaxiale Ringnut (85) aufweist,
und daß in der Ringnut (85) eine Druckfeder (51) geführt ist, die den in der Deckelöffnung (221) geführten kreisförmigen Auslöser (53) mit einem Anschlagrand (531) gegen die Innenseite des Deckels (2) drückt.

8. Schließeinheit nach Anspruch 7,
**dadurch gekennzeichnet,** daß der Lagerring (41) des Schlüssels (4)
- durch die Spiralfeder (6) in die Arbeitsposition gedrückt wird,
- innen einen Führungsschenkel (411) hat, der sich radial erstreckt, an einer Stelle durch eine Arretierkerbe (4112; Fig 11) unterbrochen ist und das Lagerstück (222; Fig 14) umschließt, und
- unter der Arretierkerbe (4112) einen Rastanschlag (414) hat,
und daß der Auslöser (53) eine Rastvorrichtung (52) mit einem Rastschenkel (512) und einer Rastnase (522) aufweist, die in einer durch die Druckfeder (51) gesicherten Normallage in die Arretierkerbe (4112) des Schlüssels (4) eingreift und die gegen die Kraft der Druckfeder (51) aus der Normallage in eine Freigabeposition bewegbar ist.

9. Schließeinheit nach Anspruch 8,
**dadurch gekennzeichnet,**
daß der Führungsschenkel (411) diametral gegenüber der Arretierkerbe (4112) von einer Positionskerbe (4113) unterbrochen ist.

**Claims**

1. Lock unit
   - comprising a mechanical key (4) having a circular bearing portion and a blade (43) projecting eccentrically therefrom,
   - comprising a transmitter (3) for generating a modulated transmission signal for remotely controlling a lock system, in particular of a motor vehicle, equipped with a receiver,
   - comprising a common housing (1, 2) for the transmitter (3) and key (4),
   - comprising a circular bearing member (222; FIG. 14) in the housing (1, 2) in which the key (4) is rotatably mounted with its bearing portion about a central axis (Z) such that its blade (43) is pivotable between a working position outside the housing and a fixed position in a key compartment (13) of the housing,
   - characterised
   - in that the housing consists of a lower part (1) and a flat cover (2),
   - in that the key is mounted rotatably on the cover (2),
   - in that a battery compartment (11; FIG. 15) is provided in the lower part (1) arranged next and parallel to the key compartment (13), and
   - in that the cover (2) and the lower part (1) are pivotable with respect to one another and releases the battery compartment (11) in one position.

2. Lock unit according to Claim 1, characterised in that the width of the housing (1, 2) is substantially equal to the diameter of the circular bearing portion of the key (4), the length of the housing (1, 2) is substantially equal to the length of the key (4), and the height of the housing (1, 2) is substantially equal to the height of the battery compartment (11).

3. Lock unit according to Claim 1, characterised in that the key (4) has a bearing ring (41; FIG. 1, 11) as bearing portion, and in that the blade (43) is arranged approximately tangentially relative to the bearing ring (41) and is detachably connected to the bearing ring (41) via a coupling member (431).

4. Lock unit according to Claim 1, characterised in that the lower part (1) and cover (2) of the housing are coupled to one another by a bayonet connection and a lock connection arranged at a distance therefrom,
   - the bayonet connection being disposed coaxially with the central axis (Z) and consisting, on the one hand, of a coupling pin (19) with a hammer head (191; FIG. 4,5) and, on the other hand, of a bearing hole (81; FIG. 12), mated therewith and having a bayonet slot (82; FIG. 12), and
   - the lock connection (FIG. 15) consisting, on the one hand, of a lock pocket (182; FIG. 3) and, on the other hand, of a lock (23; FIG. 9).

5. Lock unit according to Claim 4, characterised in that arranged between the lower part (1) and cover (2) of the housing is a turning stop (24, 74; FIG. 6; FIG. 10; FIG. 13) which limits rotation of the two housing parts relative to one another about the central axis (2) in such a way that the bayonet connection cannot be released, but that the battery compartment (11) is accessible.

6. Lock unit according to Claim 4, characterised in that the bearing member (222; FIG. 14) for the key (4) is a circular ring on the inside of the cover (2), and in that the trigger (53) is arranged in the form of a resilient push button inside the circular ring, and is accessible through a cover opening (221).

7. Lock unit according to Claim 6, characterised in that the bearing ring (41) of the key (4) is guided between the lower part of the cover (2) and a bearing disk (8) (FIG. 14), in that the bearing disk (8)
   - is connected via pins (223) of the cover (2) thereto,
   - has in the centre the bearing hole (81) and the bayonet slot (82) of the bayonet connection, and
   - has on the side facing the cover (2) an annular groove (85) coaxial with the bearing hole (81),
   and in that guided in the annular groove (85) is a compression spring (51) which presses the circular trigger (53), guided in the cover opening (221), against the inside of the cover (2) by means of a stop edge (531).

8. Lock unit according to Claim 7, characterised in that the bearing ring (41) of the key (4)
   - is pressed by the helical spring (6) into the working position,
   - has on the inside a guide leg (411), which extends radially, is interrupted at one point by a fixing notch (4112; FIG. 11), and surrounds the bearing member (222; FIG. 14), and

- has a catch (414) under the fixing notch (4112),

  and in that the trigger (53) has a catch mechanism (52) comprising a catch leg (521) and a catch tab (522), which catch mechanism engages in the fixing notch (4112) of the key (4), in a normal position secured by the compression spring (51), and can be moved from the normal position into a release position against the force of the compression spring (51).

9. Lock unit according to Claim 8, characterised in that the guide leg (411) is interrupted diametrically opposite the fixing notch (4112) by a position notch (4113).


**Revendications**

1. Dispositif de fermeture
   - comportant une clé mécanique (4) possédant une partie de support de forme circulaire et un panneton (43) excentré par rapport à la partie de support,
   - un émetteur (3) servant à produire un signal d'émission modulé pour télécommander une installation de fermeture équipée d'un récepteur, notamment d'un véhicule automobile,
   - un boîtier commun (1,2) pour l'émetteur (3) et la clé (4),
   - un élément de support circulaire (222; figure 14) situé dans le boîtier (1,2) et dans lequel la clé (4) peut être supportée par sa partie de support de manière à pouvoir tourner autour d'un axe central (Z) afin que son panneton (43) puisse pivoter entre une position de travail à l'extérieur du boîtier et une position de blocage dans un logement de clé (13) du boîtier,

   caractérisé par le fait
   - que le boîtier est formé par une partie inférieure (1) et un couvercle plat (2),
   - que la clé est supportée de manière à pouvoir tourner sur le couvercle (2),
   - qu'un logement (11; figure 15) pour des piles, qui est disposé à côté et parallèlement au logement de clé (13), est prévu dans la partie inférieure (1), et
   - que le couvercle (2) et la partie inférieure (1) peuvent pivoter l'un par rapport à l'autre et, dans une position, libérer le logement (11) pour les piles.

2. Dispositif de fermeture suivant la revendication 1, caractérisé par le fait

que la largeur du boîtier (1,2) est sensiblement égale au diamètre de la partie de support circulaire de la clé (4), que la longueur du boîtier (1,2) est sensiblement égale à la longueur de la clé (4) et que la hauteur du boîtier (1,2) est sensiblement égale à la hauteur du logement (11) pour les piles.

3. Dispositif de fermeture suivant la revendication 1, caractérisé par le fait

que la clé (4) possède, comme élément de support, un anneau (41; figure 1,11), et que le panneton (43) est disposé approximativement tangentiellement par rapport à l'anneau de support (41) et est relié de façon amovible à cet anneau de support (41) au moyen d'une pièce d'accouplement (431).

4. Dispositif de fermeture suivant la revendication 1, caractérisé par le fait

que la partie inférieure (1) et le couvercle (2) du boîtier sont accouplés entre eux par une liaison à emboîtement et une liaison à verrou, distante de la précédente,
   - la liaison à emboîtement étant coaxiale à l'axe central (Z) et constituée d'une part par un téton d'accouplement (19) possédant une tête de marteau (191; figures 4, 5) et d'autre part par un trou de support (81; figure 12) adapté à ce téton, et
   - la liaison à verrou (figure 15) étant constituée d'une part par un logement (182; figure 3) pour le verrou et d'autre part par un verrou (23; figure 9).

5. Dispositif de fermeture suivant la revendication 4, caractérisé par le fait

qu'entre la partie inférieure (1) et le couvercle (2) du boîtier est disposé un système de blocage en rotation (24,74; figure 6; figure 10; figure 13), qui limite une rotation réciproque des deux parties du boîtier autour de l'axe central (Z) de telle sorte que la liaison à emboîtement ne peut pas se défaire, mais que le logement (11) pour les piles est accessible.

6. Dispositif de fermeture suivant la revendication 4, caractérisé par le fait

que l'élément de support (222; figure 14) pour la clé (4) est un anneau circulaire situé sur la face intérieure du couvercle (2), et que le dispositif de déclenchement (53) réalisé sous la forme d'un bouton-poussoir élastique est disposé à l'intérieur de l'anneau circulaire et est accessible au moyen d'une ouverture (221) ménagée dans le couvercle.

7. Dispositif de fermeture suivant la revendication 6, caractérisé par le fait
que l'anneau de support (41) de la clé (4) est
guidé entre la partie inférieure du couvercle (2)
et un dispositif de support (8) (figure 14),
que le disque de support (8)

- est raccordé au couvercle (2) par l'intermédiaire d'un embout (223) du couvercle,
- possède en son centre le trou de logement (81) et la fente d'emboîtement (82)
  de la liaison à emboîtement, et
- possède, sur la face tournée vers le couvercle (2), une gorge annulaire (85)
  coaxiale au trou de logement (81), et
  que dans la gorge annulaire (85) est guidé un ressort de pression (51) qui repousse le dispositif circulaire de déclenchement (53), guidé dans l'ouverture
  (221) ménagée dans le couvercle, par un
  bord de butée (531) contre la face intérieure du couvercle (2).

8.  Dispositif de fermeture suivant la revendication
    7, caractérisé par le fait
    que l'anneau de support (41) de la clé (4)
    - est repoussé dans la position de travail
      par le ressort spiral (6),
    - possède intérieurement une branche de
      guidage (411), qui s'étend radialement,
      est interrompue par une encoche de blocage (4112; figure 11) en un emplacement et entoure l'élément de support
      (222; figure 14), et
    - possède une butée d'encliquetage (414)
      au-dessous de l'encoche de blocage
      (4112), et
      que le dispositif de déclenchement (53)
      possède un dispositif d'encliquetage (52)
      possédant une branche d'encliquetage
      (521) et un bec d'encliquetage (522), qui,
      dans une position normale dans laquelle
      il est bloqué par le ressort de pression
      (51), s'engage dans l'encoche de blocage (4112) de la clé (4), et est déplaçable
      depuis la position normale dans une position de libération, à l'encontre de la
      force du ressort de pression (51).

9.  Dispositif de fermeture suivant la revendication
    8, caractérisé par le fait
    que la branche de guidage (411) est interrompue, dans une position diamétralement opposée à l'encoche de blocage (4112), par une
    encoche de positionnement (4113).

# FIG 1

## FIG 3

## FIG 2

## FIG 4

## FIG 5

# FIG 7

# FIG 6

# FIG 8

# FIG 10

# FIG 9

FIG 11

# FIG 12

# FIG 13

## FIG 14

## FIG 15